Europäisches Patentamt

European Patent Office

Office européen des brevets

(19)

(11) Publication number : **0 668 459 A2**

(12)

# EUROPEAN PATENT APPLICATION

(21) Application number : **95300887.7**

(22) Date of filing : **13.02.95**

(51) Int. Cl.[6] : **F16H 63/30**

(30) Priority : **17.02.94 US 198192**

(43) Date of publication of application :
**23.08.95 Bulletin 95/34**

(84) Designated Contracting States :
**AT DE ES FR GB IT SE**

(71) Applicant : **EATON CORPORATION**
Eaton Center, 1111 Superior Avenue
Cleveland Ohio 44114 (US)

(72) Inventor : **Reynolds, Joseph Douglas**
**206 West Maple**
**Climax, Michigan 49034 (US)**

(74) Representative : **Douglas, John Andrew**
**Eaton House**
**Staines Road**
**Hounslow Middlesex TW4 5DX (GB)**

(54) **Improved ball and socket connection for single shaft shifting mechanism.**

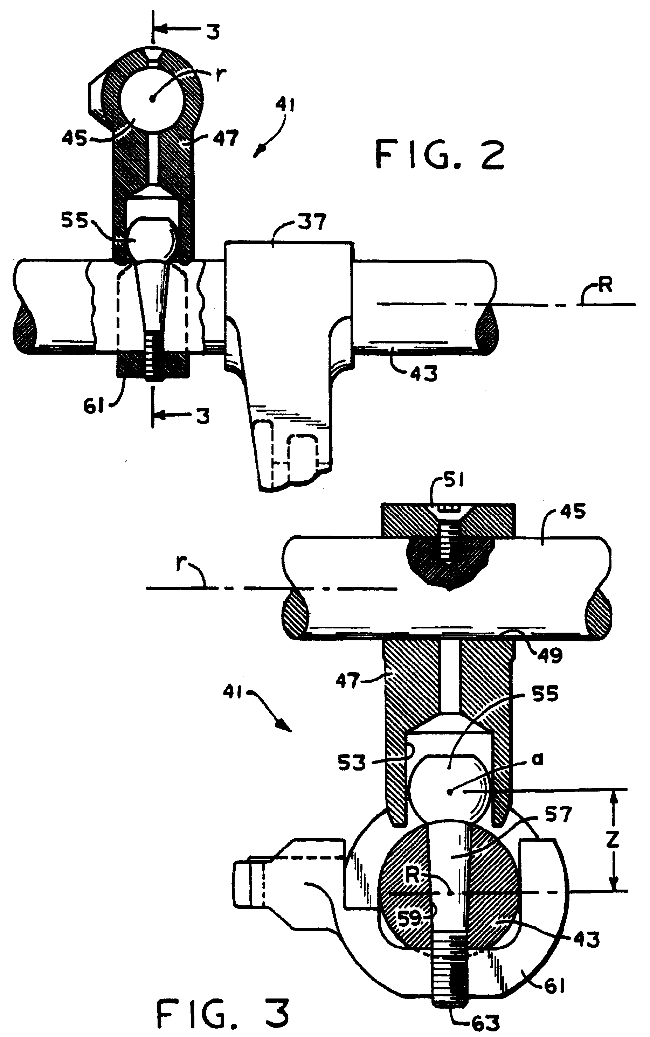

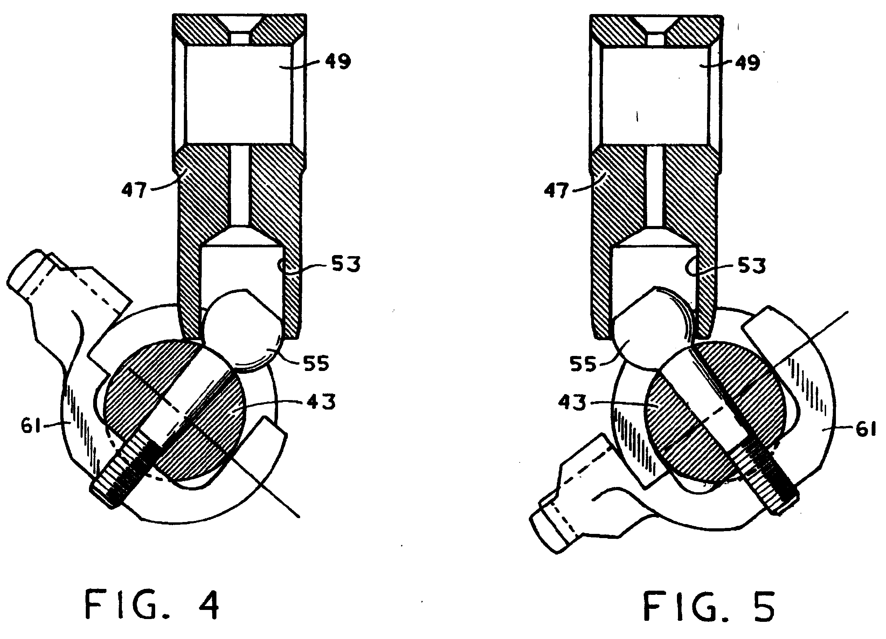

(57) A single shaft shifting mechanism (41) is disclosed of the type including a single shaft (43) mounted for relative rotational movement in a housing (17). The mechanism includes an input shift lever (47) and coupling means operable to translate movement of the shift lever into rotational movement of the single shaft (43), which has a centered position (FIG. 3) and at least one displaced position (FIG. 4) disposed at an angle (A) relative to the centered position. The single shaft (43) defines an axis of rotation (R) and the coupling means defines a ball and socket connection defining a pivot axis (a) cooperating with the axis of rotation (R) to define a vertical dimension (Z). The shift lever includes a block member (47) defining a socket (53) and the single shaft (43) includes a member (57) including a ball (55) pivotably received within the socket. Rotation of the single shaft (43) from the centered position to the displaced position through the angle (A) requires movement of the pivot axis (a) only a distance (X), wherein :

$$X = Z \sin A.$$

The result is substantially reduced movement of the input shift lever in the vehicle cab.

FIG. 3

EP 0 668 459 A2

## BACKGROUND OF THE DISCLOSURE

The present invention relates to single shaft shifting mechanisms for change gear transmissions, or for the main transmission section of a compound transmission, of the type wherein selected gear ratios are engaged and disengaged by axially moveable gears and/or gear engaging jaw clutch members. More particularly, the present invention relates to a novel ball and socket connection between an input shift lever and the single shaft shift mechanism, for transmitting input motion of the shift lever into rotation of the single shaft.

Single shaft shifting mechanisms for selecting and engaging the selectable ratios of a multiple speed change gear mechanical transmission are known in the prior art, as may be seen by reference to U.S. Patent No. 4,920,815, which is assigned to the assignee of the present invention and incorporated herein by reference. In the mechanism of the cited patent, the single shaft has a centered position, and one rotationally displaced position on either side of the centered position. More recently, single shaft shift mechanisms of the type shown in the cited patent have been developed, such as for use in 16 forward-speed synchronized transmissions. In such an application, the single shaft has a centered position, and two different rotational positions on either side of the centered position. In the subject embodiment of the present invention, and by way of example only, each of the rotational positions is displaced from the adjacent rotational position by 20°, for a total rotational displacement of the single shaft of 80° (i.e., plus and minus 40° from the centered position).

The input to a single shaft shift mechanism may be by means of a manual shift lever disposed within a shift tower, of the type illustrated and described in U.S. Patent no. 4,290,515, assigned to the assignee of the present invention and incorporated herein by reference. In such a shift lever arrangement, the shift lever pivots in both the axial and transverse planes. Alternatively, the input to the single shaft may be by means of a remote linkage control of the type illustrated and described in U.S. Patent No. 4,543,843, assigned to the assignee of the present invention and incorporated herein by reference. In such an arrangement, the shift lever or "finger" is fixed to a shaft which is oriented perpendicular to the single shaft, and can have both axial and pivotal movement.

It will be understood by those skilled in the art that the invention is not limited to any particular type of input or shift lever arrangement. Typically, in order to transmit movement of the shift lever into rotational movement of the single shaft shifter, a ball and socket connection is utilized, with the ball being disposed at the lower end of the shift lever (or finger, etc.) and the socket being defined by a member attached to the single shaft.

The conventional ball and socket connection between the shift lever and the single shaft shifter has been generally satisfactory in operation. However, it has been found, in connection with the development of the present invention, that when the single shaft has five different rotational positions, as is required for a sixteen forward speed transmission, the conventional ball and socket connection has several disadvantages.

Both of the disadvantages relate to the extreme rotational positions of the single shaft, i.e., those which are at plus and minus 40° from the centered position in the subject embodiment. As the single shaft is rotated toward either of the extreme positions, it has been observed that the ball and socket connection has a tendency to bind, actually making it difficult in some cases to achieve the two extreme rotational positions. Furthermore, if and when the extreme positions are achieved, it has been observed that the total amount of input shift lever movement (by the operator in the cab) is excessive, creating somewhat of a "space" problem in the cab.

## SUMMARY OF THE INVENTION

Accordingly, it is an object of the present invention to provide an improved single shaft shifting mechanism in which it is possible to achieve the required rotation of the single shaft, without encountering the problems discussed above.

It is a more specific object of the present invention to provide an improved single shaft shifting mechanism which achieves the required rotation of the single shaft with substantially less input movement of the shift lever.

It is a related object of the present invention to provide an improved coupling means for a single shaft shifting mechanism which makes it feasible for the single shaft to have five different rotational positions.

The above and other objects of the invention are accomplished by the provision of a single shaft shifting mechanism for selection and engagement of selectable gear ratios in a change speed transmission. The mechanism comprises a housing, and a single shaft mounted for relative rotational movement in the housing. The mechanism further comprises a shift lever and coupling means operable to translate movement of the shift lever into the rotational movement of the single shaft, the coupling means comprising a ball and socket connection. The single shaft has, rotationally, a centered position and at least one displaced position on each side of the centered position, the displaced position being disposed at an angle A relative to the centered position. The single shaft defines an axis of rotation R, and the ball and socket connection defines a pivot axis a cooperating with the axis of rotation to define a vertical dimension Z when the single shaft is in its centered position. The ball and socket connection is of the type permitting relative vertical movement between the ball and socket.

The shift mechanism is characterized by the shift lever including an input member defining a socket, and the single shaft includes a member fixed thereto including a ball, pivotably received within the socket, and moveable relative thereto in the vertical direction. Rotation of the single shaft from the centered position to the displaced position, through the angle A, requires movement of the pivot axis a only a distance X, in a direction transverse to the vertical direction, wherein:

$$X = Z \sin A.$$

## BRIEF DESCRIPTION OF THE DRAWINGS

FIG. 1 is a schematic illustration of a compound transmission of the type adapted to utilize the single shaft shifting mechanism of the present invention.

FIG. 2 is a fragmentary, side view of the single shaft shifting mechanism, including a transverse cross-section through the remote linkage input control.

FIG. 3 is a transverse cross-section, taken on line 3-3 of FIG. 2 showing the ball and socket connection of the present invention, with the single shaft in its centered position.

FIG. 4 and 5 are transverse cross-sections, similar to FIG. 3, illustrating the extreme clockwise and counter-clockwise rotational positions, respectively, of the single shaft.

FIG. 6 is a somewhat schematic view, including the shift pattern, illustrating the geometry of the prior art ball and socket connection.

FIG. 7 is a somewhat schematic view, including the shift pattern, illustrating the geometry of the ball and socket connection of the present invention.

## DESCRIPTION OF THE PREFERRED EMBODIMENTS

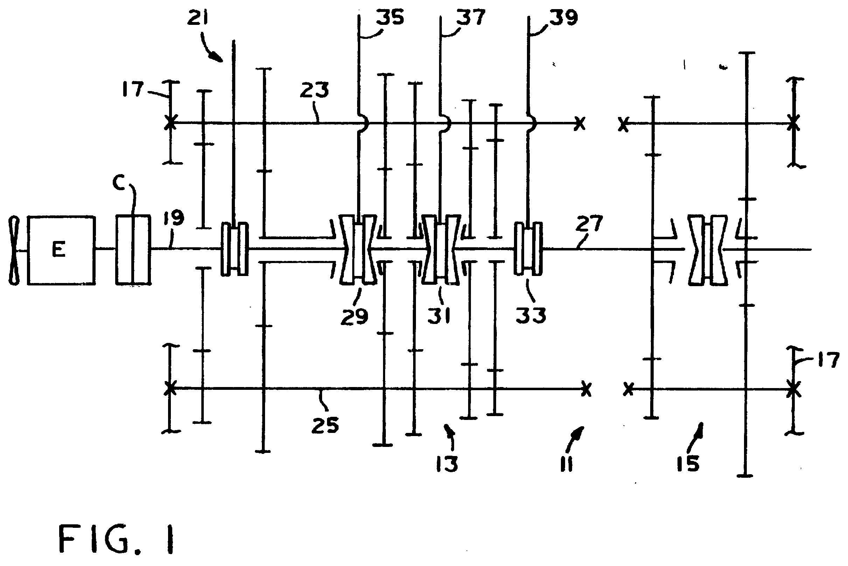

Certain terminology will be used in the following description for convenience and reference only and will not be limiting. The words "upwardly", "downwardly", "rightwardly" and "leftwardly" will designate directions in the drawings to which reference is made. The words "forward" and "rearward" will refer respectively to the front and rear ends of the transmission, as conventionally mounted in a vehicle, being respectively from the left and right sides of the transmission as illustrated in FIG. 1.

The term "compound transmission" is used to designate a change speed or change gear transmission having a multiple forward speed main transmission section and a multiple speed auxiliary transmission section connected in series, whereby the selected gear reduction in the main transmission section may be compounded by further selected gear reduction in the auxiliary transmission section. The term "synchronized clutch" and terms of similar import shall designate a clutch assembly utilized to non-rotatably couple a selected gear to a shaft by means of a positive clutch, wherein attempted engagement of the clutch is prevented until the members of the clutch are at substantially synchronous speed. The term "transmission" as used herein may include either a simple transmission or the main transmission section of a compound transmission.

Referring now primarily to FIG. 1, a range-type compound transmission, generally designated 11, is illustrated, of the type with which the single shaft shift mechanism of the present invention may be utilized. The compound transmission 11 comprises a multiple speed main transmission section 13 connected in series with a range-type auxiliary section 15. The transmission 11 is enclosed within a housing 17 (shown only in the schematic of FIG. 1), and includes an input shaft 19 driven by a prime mover such as a diesel engine E through a selectively disengaged, normally engaged, friction master clutch C.

In the main transmission section 13, the input shaft 19 passes through an input splitter section 21, which may be of the type well known in the art. The main transmission section 13 also includes two substantially identical countershaft assemblies 23 and 25, which are driven at substantially identical speeds by the input splitter section 21.

As is well known to those skilled in the art, the countershaft assemblies 23 and 25 are disposed on diametrically opposite sides of a main shaft 27, which is generally coaxially aligned with the input shaft 19. Each of the countershaft assemblies 23 and 25 is supported by suitable bearings disposed in the end walls of the housing 17. Each of the countershafts is provided with an identical grouping of countershaft gears fixed for rotation with the countershaft. A plurality of main shaft gears surround the main shaft 27 and are selectively clutchable, one at a time, to the main shaft 27, for rotation therewith, by synchronized clutch assemblies 29 and 31, and by a jaw clutch 33, in a manner also well known in the art.

Typically, the clutch assemblies 29, 31, and 33 are axially positioned by means of shift forks 35, 37 and 39, respectively, which are shown only schematically in FIG. 1, but with the shift fork 37 also being shown fragmentarily in FIG. 2. Although the clutch assemblies 29 and 31 are illustrated herein as being of the synchronized type, it should be understood that such is not essential to the present invention.

The construction and function of the auxiliary section 15 is well known to those skilled in the art, is not essential, or directly related to, the present invention and therefore, will not be described further herein.

Referring now to FIGS. 2 and 3, there is illustrated, fragmentarily, a single shaft shifting mechanism, generally designated 41, the general construction of which may be in accordance with above-incorporated U.S. Patent No. 4,920,815. The mechanism 41 includes a single shaft 43 mounted in the housing 17 for rotation about, and axial movement along, its axis of rotation R. The single shaft 43 supports the three shift forks 35, 37 and 39 each of which is provided with a through bore, through which the single shaft 43 extends. For purposes of explaining the present invention, it is sufficient to note that the shift forks 35, 37 and 39 move axially with the single shaft 43 in the manner set forth in above-incorporated U.S. Patent No. 4,920, 815.

Referring still to FIGS. 2 and 3, the input to the single shaft shifting mechanism 41, in the subject embodiment, is a remote linkage control of the general type illustrated and described in above-incorporated U.S. Patent No. 4,543,843. The remote linkage control is in the form of a remote linkage shaft 45, which is also mounted within the housing 17 (or within a separate bolt-on housing) for both axial movement therein, as well as rotational movement about an axis of rotation r defined by the remote linkage shaft 45. As may best be seen in FIG. 3, the remote linkage control includes a block member 47 which defines a through bore 49, adapted to receive the linkage shaft 45 therein. The relative axial and rotational positions of the linkage shaft 45 and block member 47 are maintained by means of a set screw 51 (or any other suitable means) received in an opening at the upward end of the block member 47 and in threaded engagement with the shaft 45.

The lower end of the block member 47 defines a socket 53, which in the subject embodiment, is generally cylindrical, rather than being hemispherical as are some sockets, for reasons which will be explained subsequently. Received within the socket 53 is a ball member 55, which is disposed at the upper end of, and preferably formed integral with, a stud-like member 57. The stud 57 is disposed with the ball 55 against, or adjacent, an upper surface of the single shaft 43, and the stud 57 extending through a diametral opening 59 defined by the single shaft 43. Disposed about the single shaft 43 is a generally annular block member 61, which is retained in the position shown by being in threaded engagement with a lower threaded portion 63 of the stud-like member 57.

Referring again to FIG. 2, it may be seen that rotation of the remote linkage shaft 45 about its axis of rotation r will cause pivotal movement of the block member 47 about the axis r, resulting in axial movement of the single shaft 43 along its axis R.

Referring again to FIG. 3, it may be seen that axial movement of the remote linkage shaft 45 along its axis r will result in "linear" movement of the block member 47, thus also moving the socket 53 in a linear path, and resulting in rotation of the single shaft 43 about its axis R. With the shifting mechanism 41 in the position shown in FIG. 3 (referred to hereinafter as the "centered" position), the ball 55 and socket 53 cooperate to define a pivot axis a. For purposes of subsequent discussion, the pivot axis a will be defined as the instantaneous axis of rotation of the ball 55 within the socket 53. The pivot axis a is illustrated in FIG. 3 as oriented parallel to the axis of rotation R of the single shaft 43, because the present invention is concerned primarily with rotational displacement of the single shaft 43 about its axis R.

As may best be seen in FIG. 3, with the mechanism in its centered position, the pivot axis a and the axis of rotation R cooperate to define a dimension Z in the "vertical" direction. Normally, the linkage shaft 45 is disposed upward from the single shaft 43 in most commercial transmissions, and thus, it will be understood by those skilled in the art that the term "vertical" as used herein simply refers to the direction from the linkage shaft 45 to the single shaft 43.

Reference hereinafter to movement in a "transverse plane" simply means movement in a plane perpendicular to the vertical direction, or movement in a plane parallel to either of the axes of rotation r and R. Thus, as the linkage shaft 45 moves along its axis r, the socket 53 moves in a transverse plane.

It should be understood by those skilled in the art that the term "shift lever" as used hereinafter can refer either to the block member 47 of the remote linkage control, or could refer to the lower end of a manual lever of the type which would be disposed within a shift tower, as illustrated and described in above-incorporated U.S. Patent No. 4,290,515, or could refer to the lower end of any other type of input lever, the movement of which is to be transmitted into rotation of the single shaft 43.

Referring now primarily to FIGS. 4 and 5, there is illustrated a pair of rotationally displaced positions of the single shaft 43, with FIG. 4 illustrating the single shaft 43 fully rotationally displaced in the clockwise direction from the centered position of FIG. 3, and FIG. 5 representing the single shaft 43 fully rotationally displaced in the counter-clockwise direction from the centered position of FIG. 3. In many commercially available transmissions, whether utilizing a shift tower or remote linkage control, the actual movement of the input shift lever in the cab is opposite the movement of the "shift lever" in the single shaft shifting mechanism. However, for simplicity of illustration and explanation, it will be assumed hereinafter that movement within the shift pattern corresponds to movement of the block member 47.

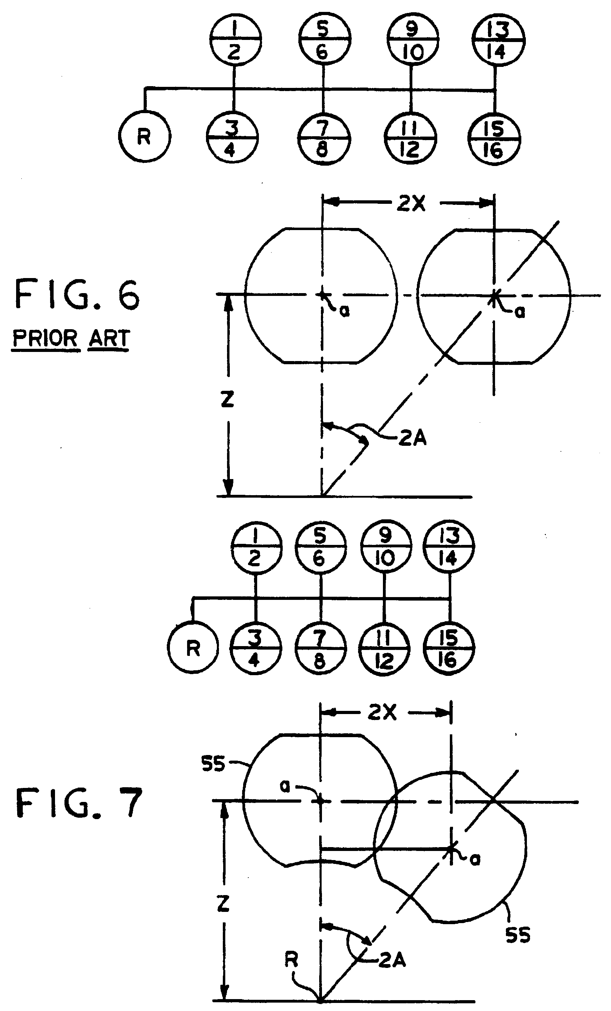

By comparing FIGS. 4 and 5 with FIG. 7, it may be seen that with the single shaft 43 in the position shown in FIG. 4, the transmission may operate in any one of thirteenth, fourteenth, fifteenth, or sixteenth gear ratios. With the single shaft 43 in the position shown in FIG. 5, the only gear into which the transmission may be shifted is reverse gear. Also, by comparing FIGS. 4 and 5 to FIG. 7, it should be understood that the single shaft 43 has another rotationally displaced position between that of FIG. 4 and the centered position of FIG. 3. In that intermediate position, the transmission may be shifted into any one of ninth, tenth, eleventh, or twelfth gears. In the centered position of FIG. 3, the transmission may be shifted into any one of fifth, sixth, seventh, or eighth gears. There is also an intermediate position between the centered position of FIG. 3 and the reverse gear position of FIG. 5 and in this intermediate position, the transmission may be shifted into either first, second, third or fourth gear.

As will be understood by those skilled in the art, FIGS. 4 and 5 illustrate the extreme rotational positions of the single shaft 43, and of the ball and socket connection, and FIGS. 6 and 7 analyze the geometry of the extreme position shown in FIG. 4. It will also be understood by those skilled in the art that the analysis of FIGS. 6 and 7 applies equally to the extreme position shown in FIG. 5. As was mentioned in the BACKGROUND OF THE DISCLOSURE, it is at the extreme rotational positions of the single shaft 43 that problems have occurred with the conventional ball and socket connection between the shift lever and the single shaft.

As used herein, the term "centered" refers to the position of FIG. 3 in which the block member 47 (or shift lever) is aligned with the ball 55 and stud 57. However, the use of the term "centered" does not necessarily mean that the particular position (or the corresponding position on the shift pattern) is the "middle" position (i.e., that there are an equal number of positions on either side of the centered position). Nor does the "centered" position have to correspond to a particular gear selection position. For example, in a fourteen speed transmission, there would be four gear selection positions of the single shaft, with two being on either side of a centered position which doesn't correspond to any gear selection.

In the conventional ball and socket connection for use with single shaft shifting mechanisms, the ball has been attached to the lower end of the shift lever or shift finger, or whatever constituted the input to the single shaft. The socket has been defined by a member fixed to move with the single shaft, both axially and rotationally. Certain disadvantages of the conventional ball and socket connection have been discussed in the BACKGROUND OF THE DISCLOSURE, and will be analyzed geometrically in connection with FIG. 6.

It is an essential feature of the present invention that the socket 53 be defined by the block member 47, or the "shift lever", or whatever constitutes the input to the single shaft. The ball member 55 is then fixed to move with the single shaft 43, and the advantages of the novel ball and socket arrangement of the present invention will be analyzed geometrically in connection with FIG. 7.

Those skilled in the art will understand that references hereinafter to a "ball" and "socket" clearly do not require that the ball comprise a complete, perfect sphere, or that the socket comprise a hemisphere. Instead, the socket of the present invention is cylindrical, as was mentioned previously, as a result of which it is possible for the ball 55 to move "vertically" relative to the socket 53, as the ball and socket pivot from the aligned, centered position of FIG. 3 toward either of the extreme positions of FIGS. 4 and 5. Thus, it will be understood that any connection or coupling which permits the movements illustrated and described herein is within the scope of the term "ball and socket". It is essential only that the ball and socket be able to achieve the rotational motion of the single shaft 43 between the positions shown in FIGS. 3-5, although it is preferred that the ball and socket also facilitate the axial movement of the single shaft 43, in response to the rotation of the remote linkage member 45, and pivotal movement of the block member 47 about the axis r. Thus, the ball and socket should preferably permit relative pivotal movement therebetween in two planes.

Referring now primarily to FIGS. 6 and 7, the geometry of the prior art ball and socket will be compared to the geometry of the ball and socket of the present invention. In comparing FIGS. 6 and 7, it should be noted that the shift pattern is the same for both the prior art and the invention, as far as the arrangement of the various gears, but that the pattern in FIG. 7 is more condensed or compact, for reasons which will become apparent subsequently.

In each of FIGS. 6 and 7, it should be noted that a comparison is being made between the centered position of the ball, and the extreme position of the ball (corresponding, for the invention, to FIG. 4). In each case, the comparison represents rotation of the single shaft from the centered position by an amount of rotation equal to an angle A, to the intermediate position (ninth through twelfth gears) then further rotational motion of the single shaft to the extreme position, through a further angle A. Thus, the angle of displacement illustrated in both FIGS. 6 and 7 is an angle 2A, while the transverse movement of the input (block member 47, shift lever, etc.) to achieve the rotational displacement through the angle 2A is represented as a linear movement of 2X.

Those skilled in the art will understand that, generically, analysis of the rotation of the single shaft 43 from its centered position to an immediately adjacent rotational position may be in terms of an angle A, and a linear movement X, and the appended claims will be written in terms of an angle A and a linear distance X. However, the analysis of FIGS. 6 and 7 is in terms of an angle 2A and a linear displacement 2X, to emphasize the effect of the present invention as the single shaft 43 approaches its extreme rotational positions.

Referring now to FIG. 6, in the prior art ball and socket connection, with the ball on the bottom end of the shift lever, and moving along a linear path with the linkage shaft 45, the total linear distance 2X must be travelled by the pivot axis a of the ball and socket connection in order to rotate the socket and the single shaft through the angle 2A.

In the subject embodiment, the angle 2A is equal to 40° and the vertical dimension Z is equal to .98 inches. Therefore, the linear displacement 2X of the input may be determined as follows:

$$2X = (Z) \times (\tan 2A);$$
$$2X = (.98 \text{ inches}) \times (\tan 40°); \text{ therefore}$$
$$2X = .82 \text{ inches}$$

Referring now to FIG. 7, it may visually be observed that, with the socket 53 being defined by the input (i.e., by the block member 47), and the ball 55 being attached to the single shaft 43, less linear displacement of the input is required to achieve a predetermined rotational displacement of the single shaft. With the ball 55 fixed to the single shaft 43, the pivot axis a also rotates about the axis of rotation R of the single shaft, and therefore, the distance from the axis R to the pivot axis a is equal to the dimension Z, even after the single shaft has rotated through the angle 2A. Therefore, the linear distance 2X which must be moved by the socket 53 to rotate the ball 55 through the angle 2A is substantially less than in the prior art, and may be determined as follows:

$$2X = (Z) \times (\sin 2A);$$
$$2X = (.98 \text{ inches}) \times (\sin 40°); \text{ therefore,}$$
$$2X = .63 \text{ inches.}$$

Therefore, using the prior art ball and socket connection, and assuming the dimension Z = .98 inches, the ball had to be moved a linear distance of .82 inches to rotate the single shaft 40° from its centered position to either of its extreme rotational positions. With the ball and socket connection of the present invention, it is necessary to move the socket only .63 inches in order to rotate the single shaft 40° from its centered position to either of its extreme rotational positions.

The ball and socket connection of the present invention thus reduces the linear travel of the input .19 inches, on either side of the centered position, such that the total reduction in the linear travel of the input would be .38 inches. As was mentioned in the BACKGROUND OF THE DISCLOSURE, it is an object of the present invention to be able to achieve the full rotational displacement of the single shaft with reduced travel of the shift lever in the vehicle cab. In a typical, commercial transmission of the type with which the present invention would be used, for every unit of displacement of the input to the single shaft, there is somewhere between six and ten units of movement of the shift lever by the driver. Therefore, the reduction of .38 inches of overall input movement by using the present invention, results in a reduction in shift lever movement in the cab of anywhere from about 2.2 inches to about 3.8 inches.

Thus, the improved ball and socket connection of the present invention will greatly facilitate the use of single shaft shifting mechanisms in which it is necessary or desirable for the single shaft to have five separate rotational positions. Although the particular reduction in the linear displacement 2X, achieved in the subject embodiment, is unique to the particular dimension Z and angle 2A chosen, those skilled in the art will understand that, in another design, there will still be a significant reduction in 2X, even with a different Z and 2A.

The invention has been described in great detail in the foregoing specification, and it is believed that various alterations and modifications of the invention will become apparent to those skilled in the art from a reading and understanding of the specification. It is intended that all such alterations and modifications are included in the invention, insofar as they come within the scope of the appended claims.

## Claims

1. A single shaft shifting mechanism for selection and engagement of selectable gear ratios in a change speed transmission, said mechanism comprising a housing, a single shaft mounted for relative rotational movement in said housing; said mechanism further comprising a shift lever and coupling means operable to translate movement of said shift lever into said rotational movement of said single shaft, said coupling means comprising a ball and socket connection; said single shaft having, rotationally, a centered position and at least one displaced position on each side of said centered position, said displaced position being disposed at an angle A relative to said centered position; said single shaft defining an axis of rotation, and said ball and socket connection defining a pivot axis cooperating with said axis of rotation, to define a vertical dimension Z when said single shaft is in said centered position; said ball and socket connection being of the type permitting relative vertical movement between the ball and socket; said shift mechanism being characterized by:

    (a) said shift lever includes an input member defining a socket;

    (b) said single shaft includes a member fixed thereto including a ball, pivotably received within said socket, and moveable relative thereto in said vertical direction;

    (c) whereby rotation of said single shaft from said centered position to said displaced position, through said angle, requires movement of said pivot axis only a distance X, in a direction transverse to said vertical direction, wherein:

$$X = Z \sin A.$$

2. A single shaft shifting mechanism as claimed in claim 1 characterized by said single shaft having first and second displaced positions on either rotational side of said centered position, said first displaced positions being disposed at said angle, relative to said centered position, and said second displaced positions being disposed at an angle relative to said centered position.

3. A single shaft shifting mechanism as claimed in claim 1 characterized by said single shaft being mounted for relative axial movement in said housing, said relative axial movement being achieved in response to pivotal movement of said shift lever in a direction parallel to said axis of rotation of said single shaft.

4. A single shaft shifting mechanism as claimed in claim 1 characterized by said shift lever comprising a remote linkage member, mounted for axial movement along an axis of rotation oriented generally perpendicular to said axis of rotation of said single shaft, movement of said remote linkage member an axial distance X corresponding to rotation of said single shaft through said angle.

5. A single shaft shifting mechanism as claimed in claim 4 characterized by said block member being fixed to said remote linkage member for movement therewith, whereby said socket moves in a transverse plane perpendicular to said vertical direction, while said ball rotates with said single shaft about said axis of rotation.

6. A single shaft shifting mechanism as claimed in claim 1 characterized by said member fixed to said single shaft comprises a stud-like member extending diametrally through said single shaft, and including means operable to retain said stud-like member in said fixed position, said ball being disposed at one end of said stud-like member.

FIG. 1

EP 0 668 459 A2

FIG. 2

FIG. 3

FIG. 5

FIG. 4

FIG. 6

PRIOR ART

FIG. 7

11